# FASCICULE DE BREVET EUROPEEN

(11) **EP 1 908 345 B1**
(45) Date de publication et mention de la délivrance du brevet: **03.12.2008**
(21) Numéro de dépôt: 07356132.6
(22) Date de dépôt: 02.10.2007
(51) Int. Cl.: A01M 7/00, B60H 1/00

(54) **Système de ventilation pour cabine d'engin agricole intervenant dans les opérations de pulvérisation, et engin agricole équipé d'un tel système**
Belüftungssystem für Kabine einer Landwirtschaftsmaschine, die zum Sprühen eingesetzt wird, und mit einem solchen System ausgestattete Landwirtschaftsmaschine
Ventilation system for a farm machine cabin used for spraying operations, and farm machine equipped with such system

(30) Priorité: 03.10.2006 FR 0654071
(43) Date de publication de la demande: 09.04.2008
(73) Titulaire: EXEL INDUSTRIES, 51200 Epernay (FR)
(72) Inventeur: Ballu, Patrick, 51100 Reims (FR)
(74) Mandataire: Grand, Guillaume

(56) Documents cités:
- EP-A- 0 120 753
- FR-A1- 2 522 791
- US-A- 5 468 183
- US-A1- 2003 156 043

## Description

La présente invention se rapporte à un système de ventilation pour cabine d'engin agricole intervenant dans les opérations de pulvérisation, et à un engin agricole équipé d'un tel système.

Comme cela est connu en soi, ou par exemple du document EP-A-0 120 753, qui est considéré comme l'art antérieur le plus proche, les cabines des engins agricoles intervenant dans les opérations de pulvérisation (pulvérisateurs automoteurs, tracteurs traînant ou portant des pulvérisateurs) sont équipées de moyens de ventilation permettant de faire circuler de l'air dans l'espace où se trouve l'opérateur.

Lors des opérations de pulvérisation, une partie de l'air pollué par les produits phytosanitaires pulvérisés circule à l'intérieur du système de ventilation et pénètre donc dans la cabine où se trouve l'opérateur.

Outre le fait que ceci est à la longue dangereux pour l'opérateur (les produits phytosanitaires étant très nocifs), les éventuels filtres présents dans le système de ventilation s'encrassent rapidement, ce qui nécessite leur changement fréquent.

La présente invention a notamment pour but de remédier à ces inconvénients.

On atteint ce but de l'invention avec un système de ventilation pour cabine d'engin agricole intervenant dans les opérations de pulvérisation, du type comprenant :
- au moins une prise d'air extérieur,
- au moins une arrivée d'air débouchant dans ladite cabine,
- des moyens pour faire circuler vers ladite arrivée d'air l'air provenant de ladite prise d'air extérieur,
- des moyens de fermeture sélective de ladite prise d'air extérieur, dits premiers moyens de fermeture, et
- des moyens de commande de la fonction de pulvérisation, lesdits premiers moyens de fermeture étant asservis auxdits moyens de commande de manière que l'activation et la désactivation de la fonction de pulvérisation entraînent respectivement l'obturation et l'ouverture de ladite prise d'air par lesdits premiers moyens de fermeture.

Grâce à l'asservissement des premiers moyens de fermeture aux moyens de commande de la fonction de pulvérisation, pendant les phases de pulvérisation, la prise d'air extérieur est automatiquement obturée, ce qui permet d'isoler la cabine vis-à-vis de tout air pollué par du produit phytosanitaire, ainsi que d'éviter d'encrasser, le cas échéant, les filtres du système de ventilation.

Suivant d'autres caractéristiques optionnelles du système de conditionnement d'air selon l'invention :
- ce système comprend en outre des moyens de filtration de l'air entrant dans ladite prise d'air extérieur : ces moyens de filtration permettent d'améliorer la qualité de l'air entrant dans la cabine ;
- ce système comprend en outre des moyens pour modifier la température de l'air : ces moyens permettent à l'opérateur de chauffer et/ou de refroidir l'air de sa cabine ;
- ce système comprend en outre au moins une entrée de recyclage de l'air de ladite cabine : cette entrée de recyclage permet de ventiler la cabine lorsque la prise d'air extérieur est fermée ;
- ce système comprend en outre des deuxièmes moyens de fermeture sélective de ladite entrée de recyclage, ces deuxièmes moyens de fermeture étant asservis auxdits moyens de commande de manière que l'activation et la désactivation de la fonction de pulvérisation entraînent respectivement l'ouverture et l'obturation de ladite entrée de recyclage par lesdits deuxièmes moyens de fermeture : ces deuxièmes moyens de fermeture permettent d'augmenter le flux d'aspiration d'air provenant de l'extérieur, pendant les périodes où la fonction de pulvérisation est désactivée ;
- lesdits premiers et deuxième moyens de fermeture comprennent un unique clapet susceptible d'obturer sélectivement ladite prise d'air et ladite entrée de recyclage : l'utilisation d'un seul clapet pour fermer sélectivement les deux ouvertures constitue un mode de réalisation simple et économique ;
- ledit système comprend en outre une sortie d'air et des troisièmes moyens de fermeture sélective de ladite sortie d'air, ces troisièmes moyens de fermeture étant asservis auxdits moyens de commande de manière que l'activation et la désactivation de la fonction de pulvérisation entraînent respectivement l'obturation et l'ouverture de ladite sortie d'air par lesdits troisièmes moyens de fermeture : ces troisièmes moyens de fermeture permettent d'évacuer plus rapidement l'air situé dans la cabine pendant les périodes où la fonction de pulvérisation est désactivée ;
- ce système comprend en outre des moyens pour retarder l'ouverture desdits premiers moyens de fermeture par rapport au moment où la fonction de pulvérisation est désactivée : ce retard permet de s'assurer qu'il ne reste plus d'air pollué par la pulvérisation au moment où l'on ouvre les premiers moyens de fermeture.

La présente invention se rapporte également à un engin agricole intervenant dans les opérations de pulvérisation équipé d'un système conforme à ce qui précède.

D'autres caractéristiques et avantages de la présente invention apparaîtront à la lecture de la description qui va suivre et à l'examen des figures annexées, dans lesquelles :
- la figure 1 est une vue schématique d'un premier mode de réalisation du système selon l'invention, la fonction de pulvérisation étant désactivée,
- la figure 2 est une vue de ce système lorsque la fonction de pulvérisation est activée,
- la figure 3 est une vue d'un deuxième mode de réalisation du système selon l'invention, la fonction de pulvérisation étant désactivée,
- la figure 4 est une vue d'un troisième mode de réalisation du système selon l'invention, la fonction de pulvérisation étant désactivée,
- la figure 5 est une vue de ce système, la fonction de pulvérisation étant activée, et
- la figure 6 est une vue partielle d'un quatrième mode de réalisation selon l'invention.

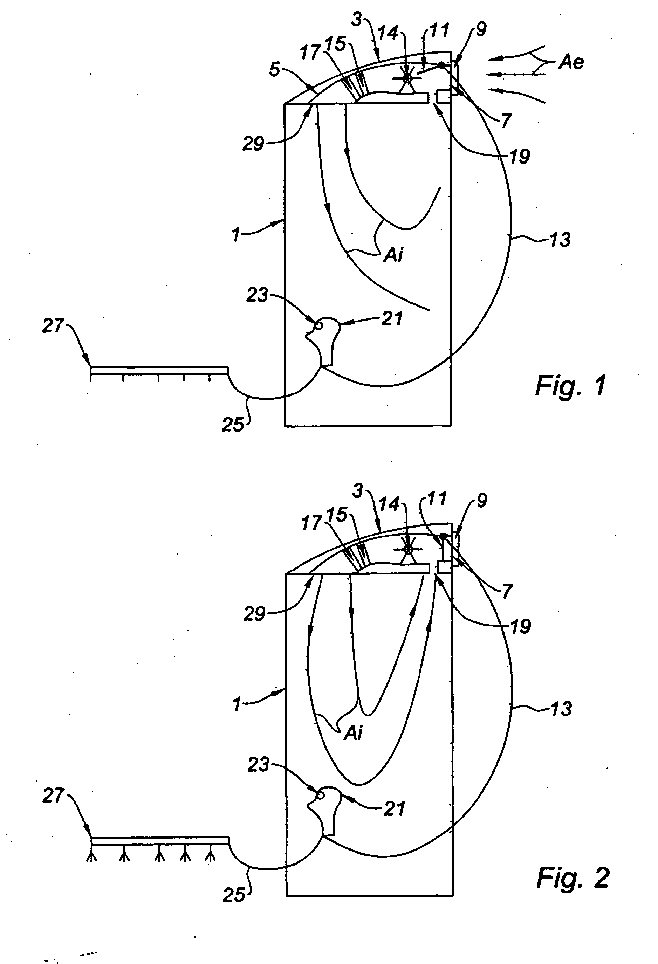

On se reporte à présent à la figure 1, sur laquelle on a représenté la cabine 1 d'un engin de pulvérisation agricole, tel qu'un engin auto moteur par exemple.

Dans sa partie supérieure, cette cabine 1 comprend des moyens de ventilation 3.

Ces moyens de ventilation comprennent une ou plusieurs conduites 5 débouchant d'une part à l'extérieur de la cabine, et d'autre part à l'intérieur de cette cabine.

La partie de cette conduite 5 débouchant à l'extérieur de la cabine constitue une prise d'air extérieure 7, munie de préférence d'un complexe filtrant 9 pouvant typiquement comprendre un filtre média, un filtre papier et un filtre à charbon.

La prise d'air extérieure 7 est susceptible d'être obturée de manière sélective par un ou plusieurs clapets 11, commandés électriquement par un circuit 13.

Dans la conduite 5, et en aval du complexe filtrant 9 et du clapet 11, se trouvent des moyens de circulation d'air pouvant comprendre un ou plusieurs ventilateurs 14, ainsi éventuellement que des moyens pouvant modifier la température de l'air, pouvant comprendre typiquement un échangeur de chauffage 15 et un échangeur de refroidissement 17.

On notera par ailleurs, qu'une ou plusieurs entrées de recyclage 19 sont prévues entre la cabine 1 et la conduite 5.

Le circuit 13 de commande du clapet 11 est relié à la poignée 21 de commande des opérations de pulvérisation, laquelle comporte notamment un interrupteur 23 de mise en route et d'arrêt des opérations de pulvérisation.

La poignée de commande 21 est bien sûr également reliée à un circuit électrique 25 permettant de commander la mise en route et l'arrêt de la pulvérisation des rampes de pulvérisation 27.

Sur la figure 1, la pulvérisation est désactivée : le clapet 11 se trouve alors en position ouverte, permettant l'entrée d'air extérieur Ae non pollué à l'intérieur de la conduite 5, et de la cabine 1.

Lorsque l'opérateur déclenche l'opération de pulvérisation en agissant sur l'interrupteur 23 situé sur la poignée de commande 21, un signal électrique circule à l'intérieur du circuit de commande 13 de manière à amener le clapet 11 vers sa position d'obturation visible à la figure 2.

Dans la configuration représentée sur cette figure 2, la cabine 1 est isolée vis-à-vis de l'air extérieur, et l'air intérieur Ai est recyclé à l'intérieur de cette cabine en circulant entre la sortie 29 de la conduite 5 formant bouche d'aération et l'entrée de recyclage 19.

La cabine 1 est de la sorte totalement isolée de l'extérieur, ce qui permet d'éviter toute entrée d'air pollué par du produit phytosanitaire pulvérisé : l'opérateur situé à l'intérieur de la cabine 1 est de la sorte protégé vis-à-vis de la nocivité de ce produit, et le complexe filtrant 9 est épargné de tout risque d'encrassement.

On notera en outre que ce fonctionnement en mode de recyclage permet d'améliorer considérablement le rendement du système de conditionnement 3, et ainsi de chauffer ou de refroidir très rapidement l'intérieur de la cabine 1.

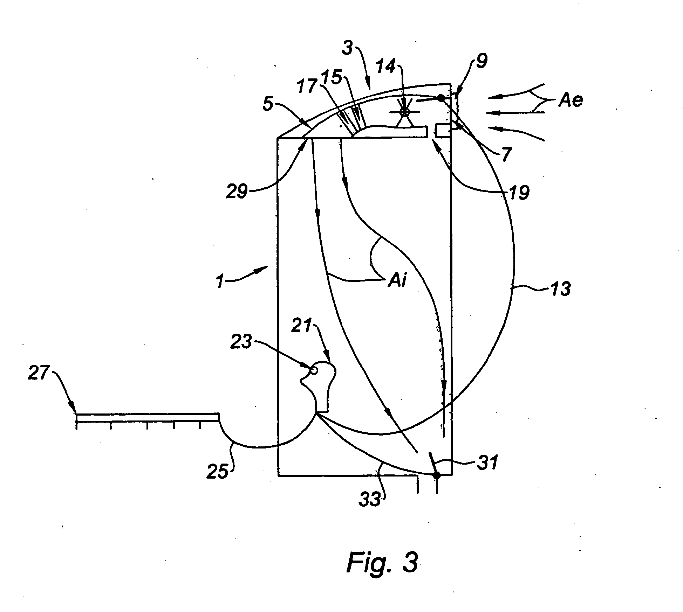

Le mode de réalisation de la figure 3 diffère de celui représenté aux figures 1 et 2 en ceci qu'il comprend un deuxième clapet permettant d'obturer sélectivement une sortie d'air de la cabine.

L'ouverture de ce deuxième clapet 31 en même temps que le premier clapet 11 permet, lorsque la pulvérisation est désactivée, d'augmenter le flux d'air sortant de la conduite 5 et traversant la cabine 1.

Ce deuxième clapet 31 est commandé électriquement par un circuit électrique 33 relié à la poignée de commande 21.

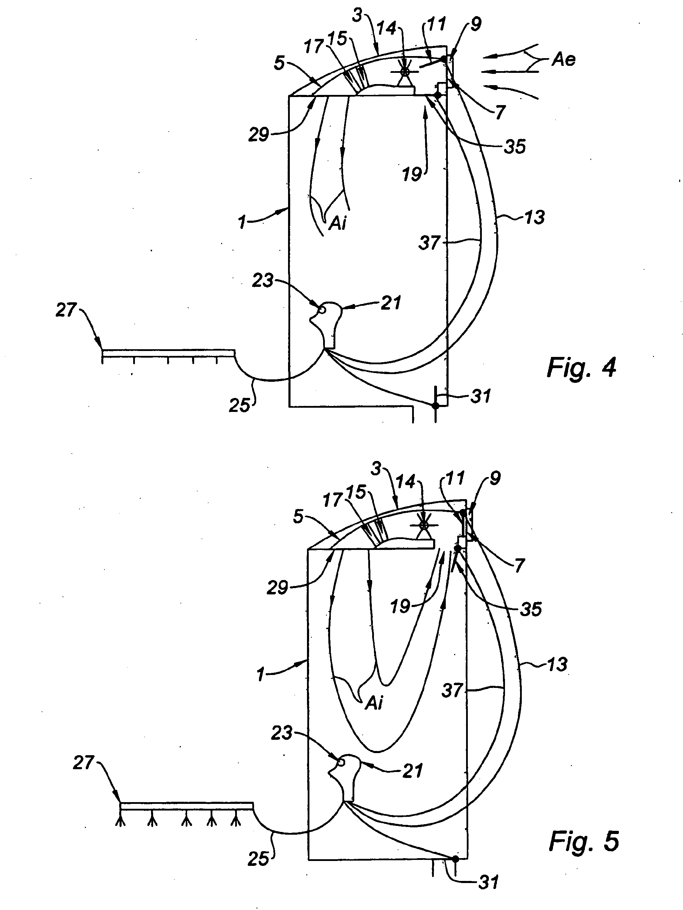

Dans le mode de réalisation des figures 4 et 5, outre le premier clapet 11 et le deuxième clapet 31, le système selon l'invention comprend un troisième clapet 35 apte à obturer sélectivement l'entrée de recyclage 19.

Ce troisième clapet 35 est commandé par un circuit électrique 37 relié à la poignée de commande 21.

Lorsque la pulvérisation est désactivée (figure 4), les premier 11 et deuxième 31 clapets sont en position ouverte, comme dans le cas du mode de réalisation 3, et le troisième clapet 35 est en positon fermée, ce qui permet de supprimer tout recyclage et ainsi de maximiser le balayage de la cabine 1 par de l'air frais et propre en provenance de l'extérieur.

En revanche, lorsque la pulvérisation est activée (figure 5), le premier clapet 11 et le deuxième clapet 31 sont fermés, évitant toute pénétration d'air extérieur pollué à l'intérieur de la cabine 1.

Le troisième clapet 35 est lui ouvert, permettant le recyclage de l'air Ai situé à l'intérieur de la cabine 1.

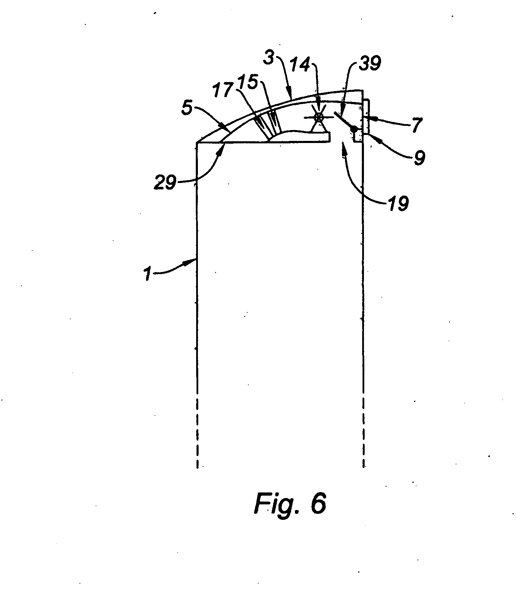

On remarquera que l'on peut avantageusement améliorer le mode de réalisation représenté aux figures 4 et 5 en remplaçant le premier clapet 11 et le troisième clapet 35 par un seul et même clapet 39 mobile entre une position où il obture la prise d'air 7 et une position où il obture l'entrée de recyclage 19 (voir figure 6).

Comme on peut le comprendre à la lumière de la description qui précède, le système de ventilation selon l'invention permet d'isoler automatiquement la cabine 1 de l'extérieur lorsque l'opérateur déclenche les opérations de pulvérisation, et inversement faire pénétrer automatiquement de l'air extérieur non pollué à l'intérieur de la cabine 1 lorsque l'opérateur stoppe les opérations de pulvérisation.

En pratique, ce passage d'un mode de ventilation à l'autre peut s'effectuer en bout de champ, lorsque l'opérateur interrompt la pulvérisation pendant qu'il effectue un demi-tour, ou lorsqu'il passe d'un mode de pulvérisation dans un champ à un mode de transport sur route.

Ce passage automatique d'un mode de ventilation à un autre en fonction de l'activation/désactivation de la fonction de pulvérisation permet à l'opérateur de se dégager de toute surveillance du mode de fonctionnement de la ventilation à l'intérieur de la cabine : il peut ainsi se consacrer entièrement à son travail en cours, tout en étant totalement protégé d'une entrée intempestive d'air pollué par des produits phytosanitaires à l'intérieur de la cabine.

Bien entendu, la présente invention n'est nullement limitée aux modes de réalisations décrits et représentés, fournis à titre d'exemple illustratif et non limitatif.

C'est ainsi que l'invention s'applique à un système de ventilation pouvant ne pas comprendre de moyens de filtration, et/ou ne pas comprendre de moyens de chauffage et/ou de refroidissement de l'air de la cabine.

C'est ainsi également que l'invention s'applique à toute cabine d'engin intervenant dans les travaux de pulvérisation, et en particulier à une cabine de tracteur destiné à porter ou à traîner un pulvérisateur.

C'est ainsi également que l'on peut prévoir une temporisation pour retarder l'ouverture des premiers moyens de fermeture par rapport au moment où la fonction de pulvérisation est désactivée, permettant de la sorte de s'assurer qu'il ne reste plus d'air pollué par la pulvérisation au moment où l'on ouvre les premiers moyens de fermeture.

## Revendications

1. Système de ventilation pour cabine (1) d'engin agricole intervenant dans les opérations de pulvérisation, du type comprenant :
- au moins une prise d'air extérieur (7),
- au moins une arrivée d'air (29) débouchant dans ladite cabine (1),
- des moyens (14) pour faire circuler vers ladite arrivée d'air (29) l'air provenant de ladite prise d'air extérieur (7),
- des moyens (11) de fermeture sélective de ladite prise d'air extérieur, dits premiers moyens de fermeture, et
- des moyens (21, 23) de commande de la fonction de pulvérisation,
**caractérisé en ce que** lesdits premiers moyens de fermeture (11) sont asservis auxdits moyens de commande (21, 23) de manière que l'activation et la désactivation de la fonction de pulvérisation entraînent respectivement l'obturation et l'ouverture de ladite prise d'air (7) par lesdits premiers moyens de fermeture (11).

2. Système selon la revendication 1, comprenant en outre des moyens (9) de filtration de l'air entrant dans ladite prise d'air extérieur (7).

3. Système selon l'une des revendications 1 ou 2, comprenant en outre des moyens (15, 17) pour modifier la température de l'air.

4. Système selon l'une quelconque des revendications précédentes, comprenant en outre au moins une entrée de recyclage (19) de l'air de ladite cabine (1).

5. Système selon la revendication 4, comprenant en outre des deuxièmes moyens (35) de fermeture sélective de ladite entrée de recyclage (19), ces deuxièmes moyens de fermeture (35) étant asservis auxdits moyens de commande (21, 23) de manière que l'activation et la désactivation de la fonction de pulvérisation entraînent respectivement l'ouverture et l'obturation de ladite entrée de recyclage (19) par lesdits deuxièmes moyens de fermeture (35).

6. Système selon la revendication 5, dans lequel lesdits premiers et deuxièmes moyens de fermeture comprennent un unique clapet (39) susceptible d'obturer sélectivement ladite prise d'air (7) et ladite entrée de recyclage (19).

7. Système selon l'une quelconque des revendications précédentes, comprenant en outre une sortie d'air et des troisièmes moyens (31) de fermeture sélective de ladite sortie d'air, ces troisièmes moyens de fermeture (31) étant asservis auxdits moyens de commande (21, 23) de manière que l'activation et la désactivation de la fonction de pulvérisation entraînent respectivement l'obturation et l'ouverture de ladite sortie d'air par lesdits troisièmes moyens de fermeture (31).

8. Système selon l'une quelconque des revendications précédentes, comprenant en outre des moyens pour retarder l'ouverture desdits premiers moyens de fermeture (11) par rapport au moment où la fonction de pulvérisation est désactivée.

9. Engin agricole intervenant dans les opérations de pulvérisation équipé d'un système conforme à l'une quelconque des revendications précédentes.

## Claims

1. Ventilation system for a cab (1) of an agricultural machine involved in spraying operations, of the type comprising:
- at least one outside air intake (7),
- at least one air inlet (29) opening out into said cab (1),
- means (14) for circulating the air originating from said outside air intake (7) towards said air inlet (29),
- means (11) for selectively closing said outside air intake, referred to as first closing means, and
- means (21, 23) for controlling the spraying function,
**characterised in that**
said first closing means (11) are automatically controlled by said control means (21, 23) so that the activation and deactivation of the spraying function respectively cause the closing and the opening of said air intake (7) by said first closing means (11).

2. System according to Claim 1, further comprising means (9) for filtering air entering into said outside air intake (7).

3. System according to one of Claims 1 or 2, further comprising means (15, 17) for modifying the temperature of the air.

4. System according to any one of the preceding claims, further comprising at least one inlet for recycling (19) air from said cab (1).

5. System according to Claim 4, further comprising second means (35) for selectively closing said recycling inlet (19), said second closing means (35) being automatically controlled by said control means (21, 23) so that the activation and deactivation of the spraying function respectively cause the opening and the closing of said recycling inlet (19) by said second closing means (35).

6. System according to Claim 5, in which said first and second closing means comprise a single flap (39) capable of selectively closing said air intake (7) and said recycling inlet (19).

7. System according to any one of the preceding claims, further comprising an air outlet and third means (31) for selectively closing said air outlet, said third closing means (31) being automatically controlled by said control means (21, 23) so that the activation and deactivation of the spraying function respectively cause the closing and the opening of said air outlet by said third closing means (31).

8. System according to any one of the preceding claims, further comprising means for delaying the opening of said first closing means (11) relative to the moment when the spraying function is deactivated.

9. Agricultural machine involved in spraying operations, provided with a system according to any one of the preceding claims.

## Patentansprüche

1. Lüftungssystem für eine Kabine (1) einer in Spritzvorgängen zum Einsatz kommenden landwirtschaftlichen Maschine, von der Bauart, die aufweist:
- mindestens einen Außenlufteinlass (7),
- mindestens eine Lufteinströmöffnung (29), die in die Kabine (1) mündet,
- Einrichtungen (14), um die vom Außenlufteinlass (7) kommende Luft zur Lufteinströmöffnung (29) zirkulieren zu lassen,
- Einrichtungen (11) zum selektiven Schließen des Außenlufteinlasses, erste Schließeinrichtungen genannt, und
- Einrichtungen (21, 23) zum Steuern der Spritzfunktion,
**dadurch gekennzeichnet, dass**
die ersten Schließeinrichtungen (11) so von den Steuereinrichtungen (21, 23) abhängig sind, dass die Aktivierung und die Inaktivierung der Spritzfunktion das Verschließen bzw. das Öffnen des Lufteinlasses (7) durch die ersten Schließeinrichtungen (11) mit sich bringen.

2. System nach Anspruch 1, darüber hinaus Einrichtungen (9) zum Filtern der in den Außenlufteinlass (7) eintretenden Luft aufweisend.

3. System nach einem der Ansprüche 1 oder 2, darüber hinaus Einrichtungen (15, 17) zum Modifizieren der Temperatur der Luft aufweisend.

4. System nach einem der vorhergehenden Ansprüche, darüber hinaus mindestens einen Rückführungseintritt (19) für die Luft der Kabine (1) aufweisend.

5. System nach Anspruch 4, darüber hinaus zweite Einrichtungen (35) zum selektiven Schließen des Rückführungseintritts (19) aufweisend, wobei diese zweiten Schließeinrichtungen (35) so von den Steuereinrichtungen (21, 23) abhängig sind, dass die Aktivierung und die Inaktivierung der Spritzfunktion das Öffnen bzw. das Verschließen des Rückführungseintritts (19) durch die zweiten Schließeinrichtungen (35) mit sich bringen.

6. System nach Anspruch 5, wobei die ersten und zweiten Schließeinrichtungen eine einzige Klappe (39) aufweisen, die selektiv den Lufteinlass (7) und den Rückführungseintritt (19) verschließen kann.

7. System nach einem der vorhergehenden Ansprüche, darüber hinaus einen Luftauslass und dritte Einrichtungen (31) zum selektiven Schließen des Luftauslasses aufweisend, wobei diese dritten Schließeinrichtungen (31) so von den Steuereinrichtungen (21, 23) abhängig sind, dass die Aktivierung und die Inaktivierung der Spritzfunktion das Verschließen bzw. das Öffnen des Luftauslasses durch die dritten Schließeinrichtungen (31) mit sich bringen.

8. System nach einem der vorhergehenden Ansprüche, darüber hinaus Einrichtungen aufweisend, um das Öffnen der ersten Schließeinrichtungen (11) in Bezug auf den Moment zu verzögern, zu dem die Spritzfunktion inaktiviert wird.

9. Landwirtschaftliche Maschine, die in Spritzvorgängen zum Einsatz kommt, wobei die mit einem System nach einem der vorhergehenden Ansprüche ausgestattet ist.
